Europäisches Patentamt

European Patent Office

Office européen des brevets

(19)

(11) **EP 0 651 924 B1**

(12)                    **EUROPEAN PATENT SPECIFICATION**

(45) Date of publication and mention
of the grant of the patent:
**27.08.1997   Bulletin 1997/35**

(21) Application number: **93915741.8**

(22) Date of filing: **29.06.1993**

(51) Int Cl.6: **H04J 3/16**

(86) International application number:
**PCT/EP93/01674**

(87) International publication number:
**WO 94/03001 (03.02.1994 Gazette 1994/04)**

(54) **METHOD FOR THE CELLIZATION AND THE DECELLIZATION OF TRIBUTARY UNITS IN A STM-1 FRAME OF A TELECOMMUNICATION SYSTEM OF THE SYNCHRONOUS DIGITAL HIERARCHY TYPE (SDH)**

VERFAHREN ZUR KONVERTIERUNG/DEKONVERTIERUNG VON UNTERSYSTEMEINHEITEN IN EINEM STM-1 RAHM EINES SDH-UBERTRAGUNGSSYSTEMS

METHODE DE CELLULARISATION ET DE DECELLULARISATION D'UNITES TRIBUTAIRES DANS UNE SEQUENCE STM-1 D'UN SYSTEME DE TELECOMMUNICATIONS DU TYPE A HIERARCHIE DIGITALE SYNCHRONE (SDH)

(84) Designated Contracting States:
**DE FR NL SE**

(30) Priority:  **24.07.1992  IT   MI921807**

(43) Date of publication of application:
**10.05.1995   Bulletin 1995/19**

(73) Proprietor: **ITALTEL SOCIETA ITALIANA TELECOMUNICAZIONI s.p.a.**
**20149 Milano (IT)**

(72) Inventors:
• **BIANCALANA, Alberto**
**I-50100 Firenze (IT)**
• **COLLIVIGNARELLI, Marco**
**I-28040 Dormelletto (IT)**

(74) Representative: **Giustini, Delio**
**c/o Italtel Società Italiana Telecomunicazioni s.p.a.**
**P.O. Box 10**
**20019 Settimo Milanese (MI) (IT)**

(56) References cited:
**EP-A- 0 342 510              EP-A- 0 468 818**

• **CCITT RECOMMENDATION I. 432, APRIL 1991, GENEVE (CH), PAGES 5-6; NOMEN NESCIO: 'Integrated services digital network (ISDN);Overall network aspects and functions,ISDN user-network interfaces; B-ISDN user-network interface - physical layer specification'**

**Description**

Technical Field

The present invention concerns a method which allows to transform an informative flow set up in a frame structure of bytes into a frame structure of cells (cellization), and starting from the frame structure realized in this way to provide in output a new frame structure of bytes (decellization).

The invention can be used in digital telecommunication networks, and in particular in telecommunication systems including integrated digital networks in broadband type services (or high bit rate) briefly indicated as B-ISDN.

More in particular the invention concerns optic transmission systems of synchronous digital hierarchy or SDH, which will be used in the evolution from the actual telecommunication systems to those suitable to supply broadband services (B-ISDN).

For the B-ISDN services the use of the transfer and switching system ATM (Asynchronous Transfer Mode) has been specified where the informative flows are subdivided in information blocks of limited amplitude, each of these is carried by a packet or cell of 53 bytes of which 48 are assigned to the information transfer and 5 identify the informative flow to which the cell belongs.

Typically a switching node is a fast packet switch which values the header of each received ATM cell and based on this it routes the cell towards the appropriate ATM flow in output.

In order to overcome certain problems of the actual digital telecommunication networks, which provide for a data transmission of the plesiochronous type, ITU-T, particularly in recommendations G707, G708 and G709, has recently proposed a synchronous digital transmission technique called SDH. The SDH technique is based on synchronous transfer modules (STM) where the synchronous transfer module is understood to be an informative structure suitable to support the connections at section level in the SDH system. The STM includes header section fields (SOH) and payloads set up in a block structure which is repeated every 125 μs.

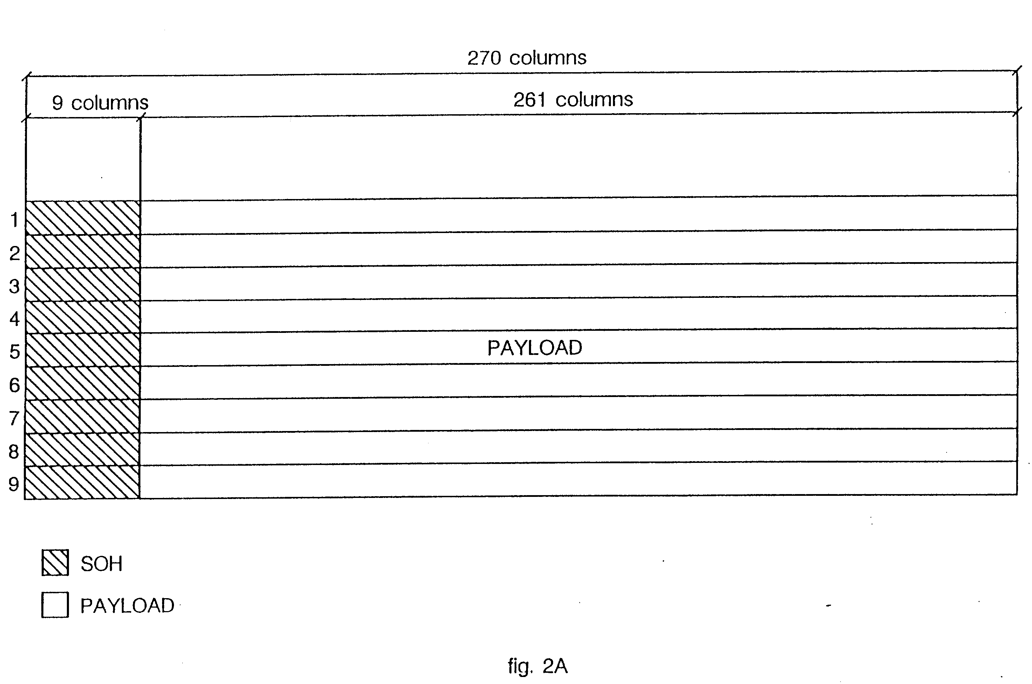

The basic module is defined at a transmission speed or bit rate of 155.520 Mbit/s and is called STM-1. As illustrated in Figure 2A the frame structure of the module or the basic level STM-1 is set up by a matrix of 9 rows and 270 columns and its elements consist of bytes, each one set up by 8 bits, which develops row by row, from the left to the right and from top to bottom. The first 9 columns of the frame include the section header fields (SOH), dedicated for example to the frame alignment, the error monitoring and auxiliary data channels. The remaining 261 columns make up the payload. In the SDH multiplexing in order to create the basic module STM-1 each one of the tributary flows will be processed before entering the payload of the STM-1 module in a way to create the so called Virtual Containers.

The Virtual Container (VC) is an informative structure suitable to transmit information including a payload field called Container (C) and a header field suitable to control the integrity of the informative flow, called Path Overhead (POH). The VCs can be of Higher Order (Higher Order: VC-4, VC-3) or of Lower Order (Lower Order: VC-2 and VC-1). According to the typology of the informative flow carried in the container some of its bytes can be not used, and they are called stuff.

Generally in the case of several tributary flows the STM-1 module carries VCs of Higher Order, while the VCs related to tributary flows are carried in the payload of the VCs of lower order. In the SDH structuring opted for in Europe the STM-1 module transports a VC-4 in which can be carried VC-32s, VC-21s and VC-12s.

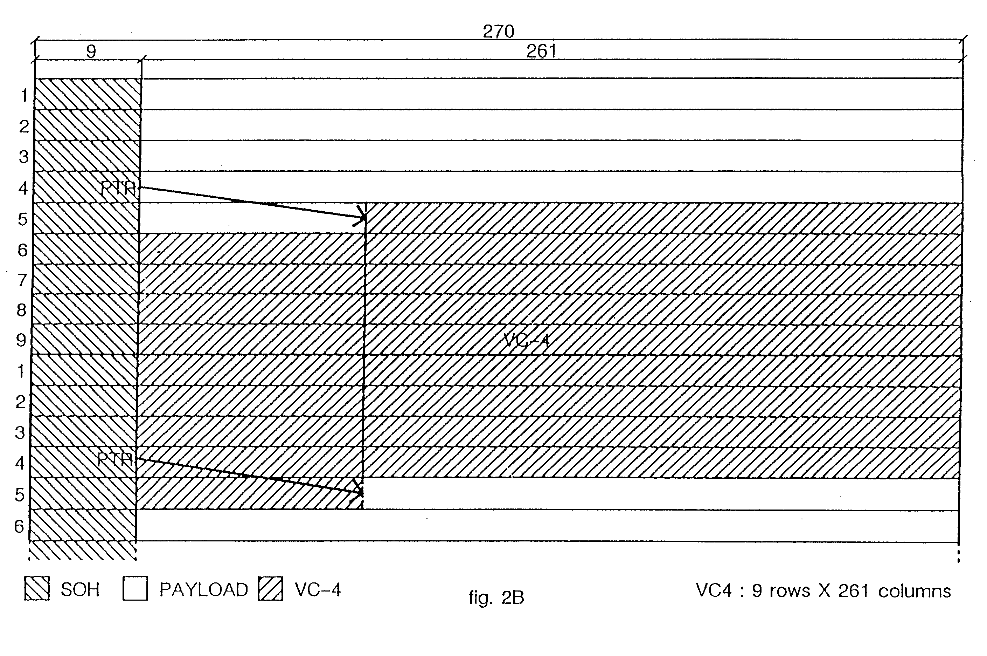

The adaptation between a VC of higher order and the section STM-1 carrying it is realized through an informative structure called Administration Unit (AU). Such administration structure includes an informative part consisting of a VC of higher order and a AU pointer which indicates the position of the VC in the payload area assigned to them inside the module STM-1 as shown in figure 2B. The initial position of the VC of higher order in the STM-1 payload may vary in order to allow the STM-1 module the transfer of the generated VC sometimes with a timing slightly different from that of the STM-1 module itself.

The adaptation between a higher order VC and a VC carried by this one is realized through an informative structure called tributary unit (TU). Such tributary unit includes an informative part made up by the carried VC, and a TU pointer which indicates the position of this in the area of the payload assigned to them inside the VC of higher order indicated in the figure by PTR. The initial position of the carried VC in the payload of the VC of higher order may float in order to allow the latter to convey the generated VC, sometimes with a timing slightly different from that of the VC of higher order.

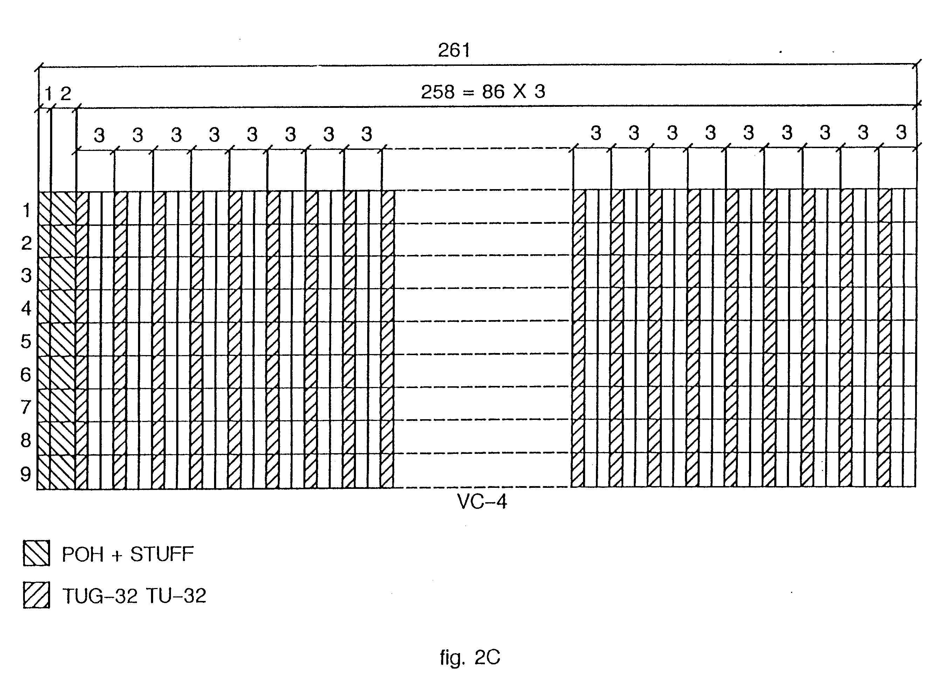

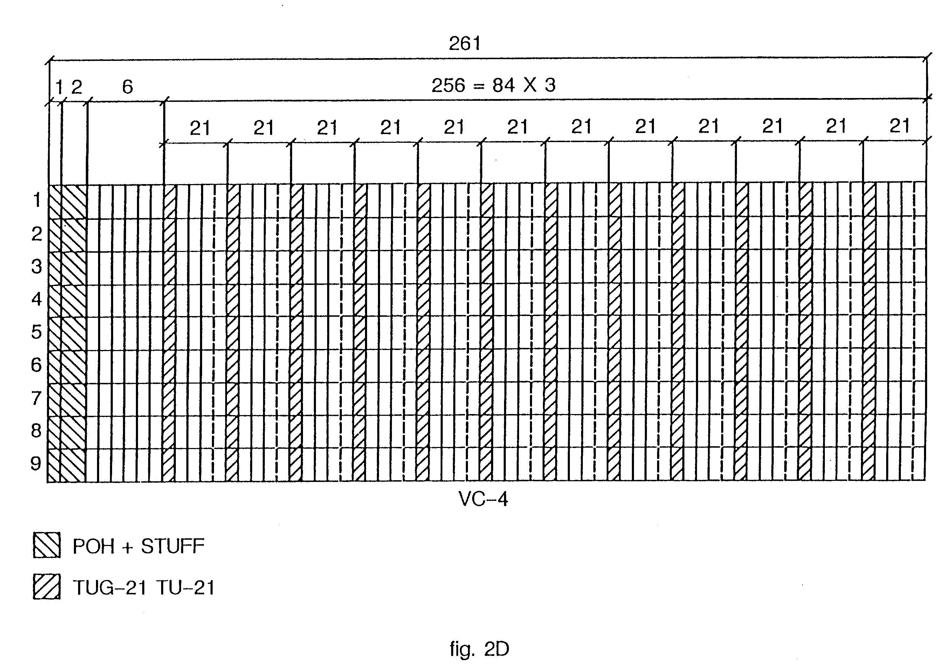

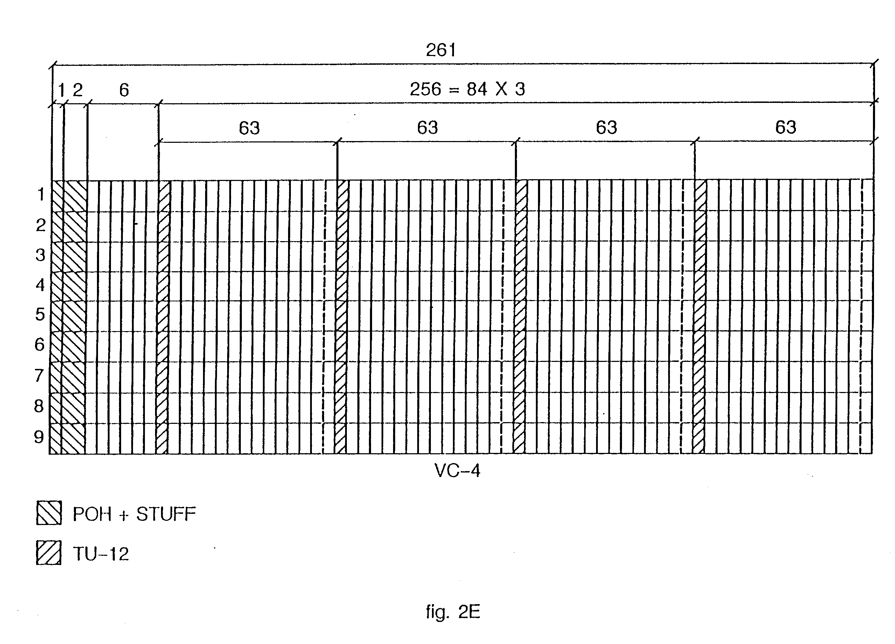

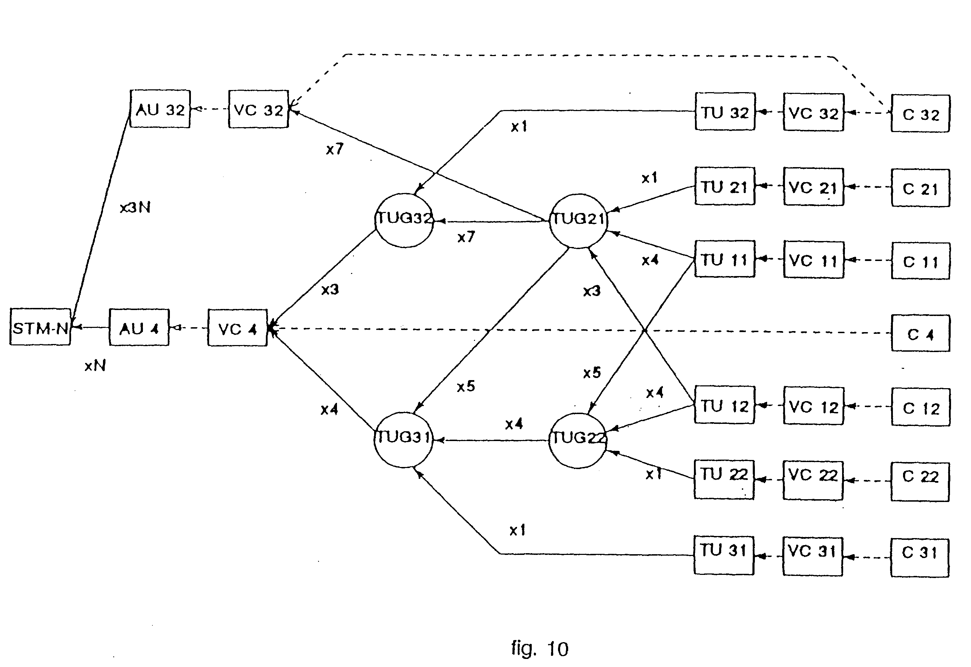

The TUs can be of various levels indicated by TU-n (where n = 1, 2, 3) set up by a corresponding VC-n and a TU pointer. One or more TU, also of different dimensions, which occupy preset positions in a VC of higher order, form a Group of Tributary Units (TUG-n) where, according to the structuring adopted in Europe, n assumes the values 32, 21. In this way, for example, as illustrated in the multiplexing map of figure 10 the payload of a VC-4 containes 3 TUG-32 of interleaved bytes, where one TUG-32 contains one TU-32 (figure 2C) or it is set up by 7 TUG-21 of interleaved bytes, where in this case a TUG-21 contains one TU-21 (figure 2D) or 3 TU-12 of interleaved bytes (figure 2E).

In the payload part of a STM-1 the byte arrangement of the VC of higher order and of whatever TU contained in it is repeated identically for each row of the STM-1 flow, so that a TU always turns out to occupy a certain number of columns of the STM-1 frame as described above. Moreover the bytes of the VC of higher order always occupy the same columns of the STM-1 payload, while this does not occur for the TU as the floating of the VC of higher order inside of its columns allows an homogeneous translation within such columns of the columns occupied by the carried TUs.

Since in the telecommunication systems a switching node or switching system operating in ATM technique can receive SDH type informative flows, it is necessary to plan some "conversion" devices or cellizators.

Background Art

EP-A-0 468 818 discloses a cell format conversion system, wherein ATM cells from the VC-4-NC payload are converted into 1-octet added ATM cells each being 54 octet long, so as to form an immaginary matrix of 5 column groups x 9 rows frame by frame.

EP-0-342 510 discloses a method of inserting packet data into C-4, C-31 and C-32 containers of a 155.520 Mbps (STM-1) frame of the CCITT Recommendation G 709.

A cellizator is a device which accepts in input a frame of whatever composition (for example with VC, whose bytes generally are not organized as ATM cells), and it produces in output a sequence of ATM cells (with header, etc.) which can be handled according to a unique principle (switching of ATM cells). More precisely, a device of this type receives in input an SDH STM-1 informative stream including a VC-4 and inside of this some virtual containers VCs of lower order.

The device carries out the mapping of the TU in ATM cells after that all cells are forwarded to the switching node ATM.

In devices of this type a disadvantage comes up due to the time necessary to collect the number of bytes from the TU to transcribe in the ATM cell before transmitting it. This time called the cellization delay cannot exceed values preset for each switching node, and therefore in order to avoid unacceptable global delays in the exchange of informations between two subscribers whose signals run through a certain number of switching nodes.

A decellizator carries out an inverted operation allowing the output of the informative flow in direction of the SDH network.

Objects of the Invention

One of the objects of the present invention is to realize a method for the cellization and decellization suitable to minimize the medium delay value of the TUs and to limit the delay dispersion period of the TUs.

More particularly, the method of the invention builds packets (namely, cells) from such bytes, and outputs such cells in a predetermined manner. Thus the cells can be processed on a cell basis, for example switched through a switching fabric, and the like.

Disclosure of Invention

The invention consists of a method for converting the bytes of a binary data flow organized according to a frame (STM-1) of a synchronous digital hierarchy (SDH) into cells (cellization), as claimed in claim 1.

As an advantage the method generates, starting from the said byte frame structure, a frame structure of 63 cells, each cell being set up by a header and a payload of fixed length or dimension, and this frame develops temporally within 125 µs, and in which the cells corresponding to a same TU occupy one or more preset positions, and that two consecutive cells linked to the same TU are separated by a number of cells (belonging to other TUs) equal to the number of columns existing between two consecutive columns of the said TU in said origin byte frame, except the overhead columns and fixed stuffing.

The method is on the other hand characterized in that said fixed length of the cell is equal to 53 bytes or on the other hand to 418 bits.

The invention consists furthermore of a method for converting received data organized as cells through the above method, into output data which are bytes organized, as claimed in claim 14.

Moreover the invention consists of a method for positioning the H pointer bytes relative to a TU-32 tributary unit, in the passage from an origin byte frame to a frame structureof 63 packets or cells as claimed in claim 22.

Finally, the invention consists of a method for positioning the V pointer bytes relative to a TU-21 or TU-12 tributary unit, respectively, in the passage from an origin byte frame to a frame structureof 63 packets or cells as claimed in claim 23 or 24, respectively.

Brief description of the drawings

The invention will now be described in a more detailed way referring to a preferred but not restrictive form of realization, illustrated by the attached figures in which:

the figures from 1A to 1E illustrate the location of the ATM cells assigned to the transport of the TUs SDH;
the figures from 2A to 2E, already described, illustrate the frame structure of the module or basic level STM-1;
the figures from 3A to 3C illustrate the structure of the STM-1 frame obtained after the Higher Order Path Adoption process;
figure 4 illustrates the cellization process for the TU-12s according to the present invention;
figure 5 illustrates the cellization process for the TU-21s according to the present invention;
figure 6 illustrates the cellization process for the TU-32s according to the present invention;
figure 7 illustrates the decellization process for the TU-12s according to the present invention;
figure 8 illustrates the decellization process for the TU-21s according to the present invention;
figure 9 illustrates the decellization process for the TU-32s according to the present invention;
figure 10 illustrates a multiplexing map of the tributaries in the STM-1 module; and
figure 11 illustrates in a schematic way the method of the present invention.

## Detailed description of the preferred embodiment

Now the decellization method will be explained in details according to the invention taking into consideration that for the simplification of the presentation only one portion will be shown in the figures, and more precisely one ninth of the entire local frame which occupies 125 µs, Every 125 µs a frame set up by 63 ATM cells is generated, each one including about 400 bits arranged as illustrated before, where the cells assigned to the transport of a certain TU are always in the same position according to the allocation principle illustrated as follows.

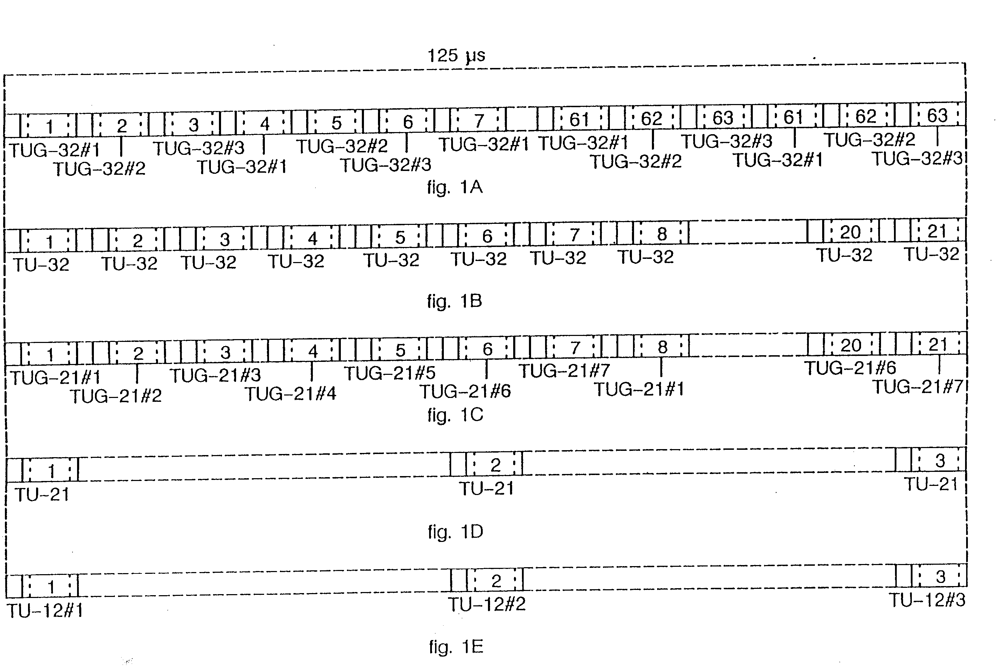

The 63 cells consist of 3 groups of 21 intercalated cells, each one assigned to the transport of the content in one of the 3 TUG-32s, as well shown in figure 1A where the cells numbered by 1, 4, 7, ..., 61 correspond to the TUG-32#1, those numbered by 2, 5, 8, ..., 62 correspond to the TUG-32#2, and those numbered by 3, 6, 9, ..., 63 correspond to TUG-32#3.

Getting down examining each single TUG-32, in case this one contains a TU-32, all 21 cells relating to the TUG-32 they belong to are used for the transport of the last, as illustrated in figure 1B which shows only the cells of one group, marked however by the numbers from 1 to 21 for simplification.

If the TUG-32 contains instead 7 TUG-21, the 21 cells of the TUG-32, they belong to, are arranged in 7 groups of 3 intercalated cells, each one assigned to the transport of what contained in one TUG-21, and shown in figure 1C where again the numbering goes from 1 to 21, and the cells are marked by TUG-21#x, with x=1, 2,...7 according to the group they belong to.

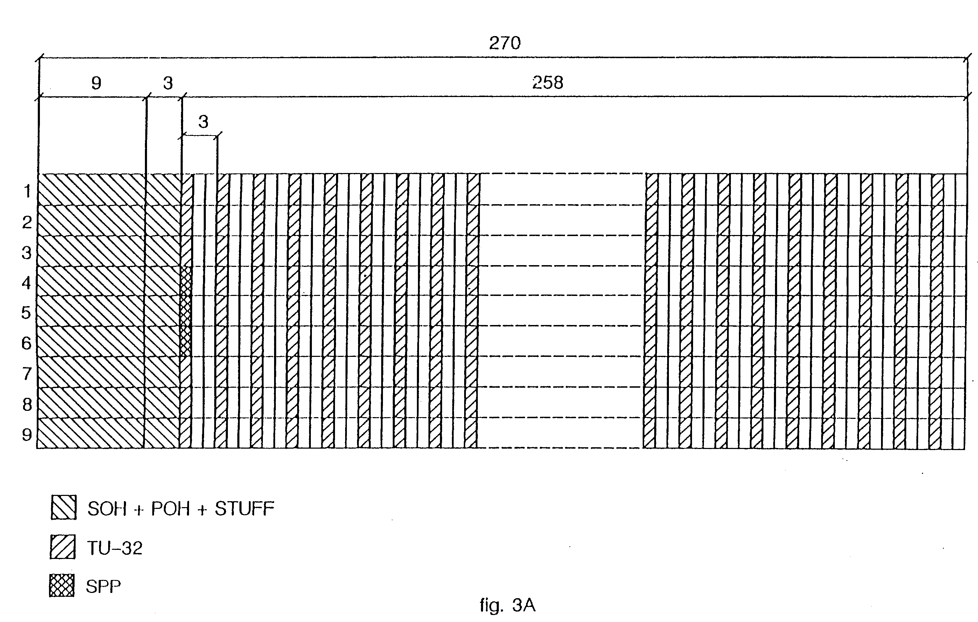

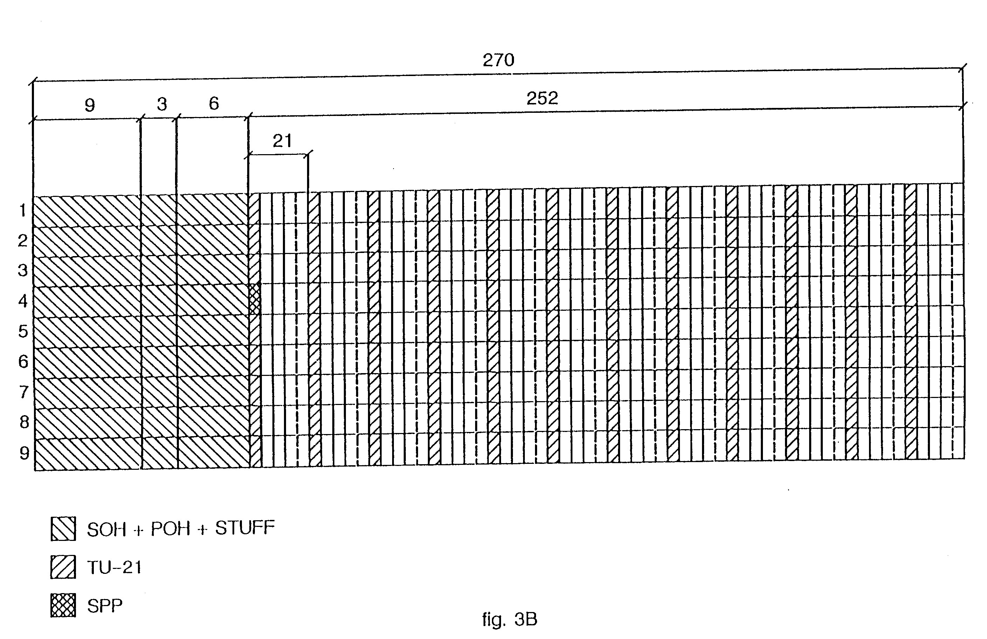

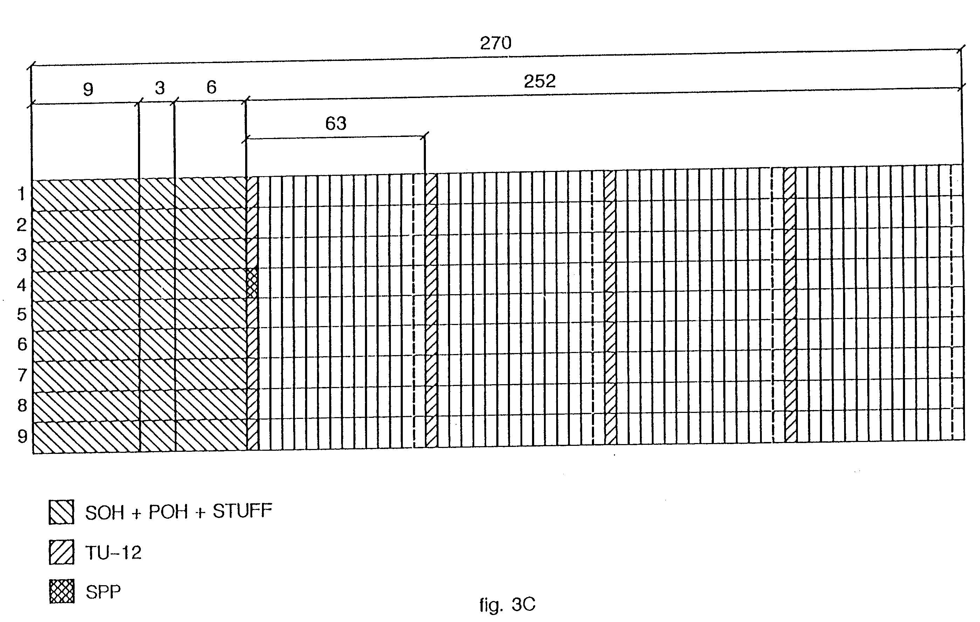

Going further down examining one single TUG-21 (to which only 3 cells are associated), if this contains one TU-21, for the transport of the last all 3 cells relating to the TUG-21, they belong to, are used as illustrated in figure 1D, while in the case the TUG-21 contains 3 TU-12, the 3 cells associated to the TUG-21 they belong to, are arranged in three groups of one cell intercalated, each one assigned to the transport of one TU-12, as illustrated in figure 1E, again indicating by #1, #2 and #3 the TU-12s. Through an adaptation procedure by which the fluctuations of the VC-4 on the TUs contained in them, are discharged, through the new elaboration of the pointers of the last (Higher Order Path Adaptation) the frame shown in figures 3A, 3B and 3C are obtained, where the TUGs and the TUs always occupy the same columns corresponding to the situation of VC-4 in fixed location and not floating within the column they belong to. More precisely, after the Higher Order Path Adaptation procedure corresponding to the pointer situation with null VC-4, the data flow is structured as follows:

- 9 unused bytes, originally occupied by the SOH
- 3 unused bytes originally the first being occupied by the POH VC-4 and the last two by fixed stuff
- 258 payload bytes belonging to the three TUG-32 of 86 bytes, with interleaved bytes.

In the particular case of seven TUG-21 contained in one TUG-32 (shown in the figures 3B and 3C) only the last 84 bytes of the TUG-32 are occupied by seven TUG-21. This situation corresponding to one row of the STM-1 frame is repeated 9 times within the frame of 125 µs.

Generally the position of the pointer bytes of the TUs (known as H bytes for TU-32 and V bytes for TU-12 and TU-21) inside the columns they belong to, turns out to be locked compared to the VC-4.

However, according to the invention, the location of the pointer bytes of the TUs inside the columns they belong to, is different from that normally foreseen (standard position) and indicated in the figure 3A, 3B and 3C by hatched portions and called SPP (Standard Pointer Position). In fact, after the Higher Order Path Adaptation process, the H and V bytes - according to the present invention - occupy in the STM-1 frame particular locations. Furthermore for the TU-12 and the TU-21 the pointer is supplied in 4 distinct phases associated to four consecutive occurrences of the VC-4 in the STM-1 module, in each of which one part of the pointer (V1, V2, V3, V4 bytes) appears, according to a multiframe synchronism associated to the VC-4 (Ha bytes of the POH) and with common reference for all TUs carried by this one.

According to the invention further to the location of the V bytes in the column of the TUs they belong to, also the multiframe phase to which those refer, is generated in an arbitrary way and does not respond to the indications mentioned above, in the sense that for all TU-12 and TU-21 contained in one VC-4 the V byte is of the same type (V1, V2, V3 or V4).

More precisely the position occupied by the H and V bytes in the STM-1 frame and the multiframe phase following to the Higher Order Path Adaptation procedure depends on the type of TU they belong to, on the position occupied by the TU in the input frame, and on the location which the TU must occupy in the output frame, which is generally different from the position occupied in the input frame.

In fact the cellization-decellization process allows to transport by ATM cells whatever TU from an STM-1 origin frame to a STM-1 destination frame, but generally this involves that the destination frame - even occupying the columns it belongs to - turns out temporally transferred within these columns with the result that the pointer octets do not any more turn out being allocated in the SPP position (Standard Pointer Position) and therefore the TU cannot be correctly handled by eventual SDH transmission devices situated downstream.

The familiar systems - in order to permit the correct processing of the TUs - foresee the presence of adaptation devices connected downstream of the decellizator suitable for the extraction of the VCs from the TUs of the frame, and , upon new pointer elaboration, the TUs are written again with the H and V bytes in standard position. The above mentioned adaptation devices have the inconvenience that they introduce delays and turn out to be expensive, as they need the presence of memory units and pointer elaboration units of analogous complexity necessary in order to execute the Higher Order Path Adaptation procedure.

The method at the basis of the present invention allows instead the elimination of the above mentioned adaptation devices as it foresees the elaboration of the V and H bytes directly within the above mentioned Higher Order Path Adaptation procedure anyhow necessary in SDH switching in order to adapt the TUs to the local system clocking. In particular, according to the invention, if after the cellization-decellization process a TU turns out transferred by N bytes delayed or anticipated, within the columns of the destination frame, during the execution of the Higher Order Path Adaptation procedure of the origin frame, it is written again in the suitable frame (figures 3A, 3b and 3C) with the pointer bytes in advance or with delay of N bytes compared to the standard position so that downstream of the decellization process the pointer bytes will be placed in the SPP position (Standard Pointer Position).

Analogous considerations can be applied within the multiframe of the V bytes for the TU-12 and TU-21 or within the Higher Order Path Adaptation procedure of the origin frame the V bytes are placed in such position in order to respect the correct position within the multiframe in the destination frame.

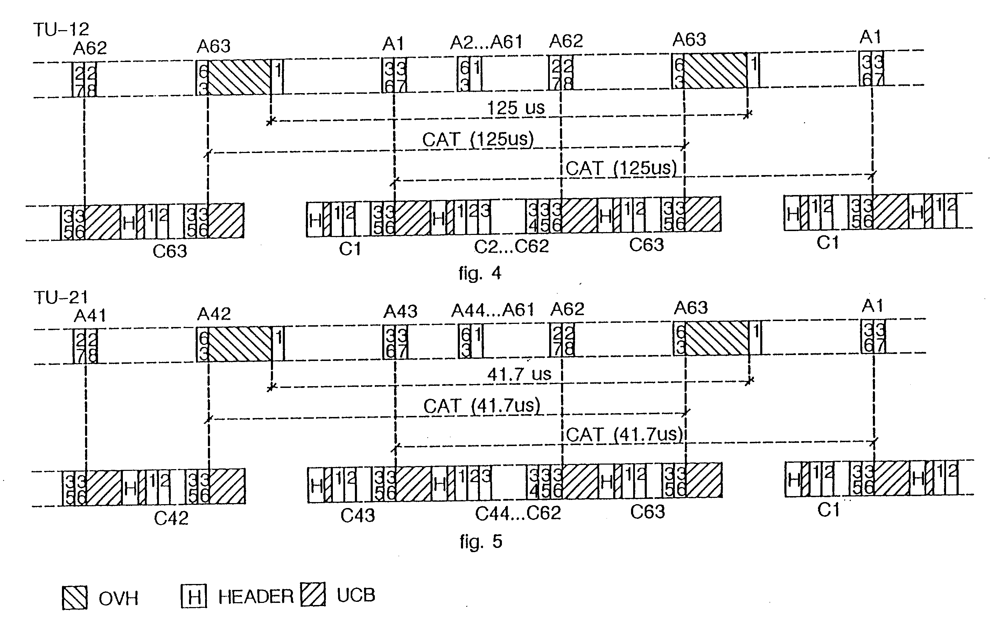

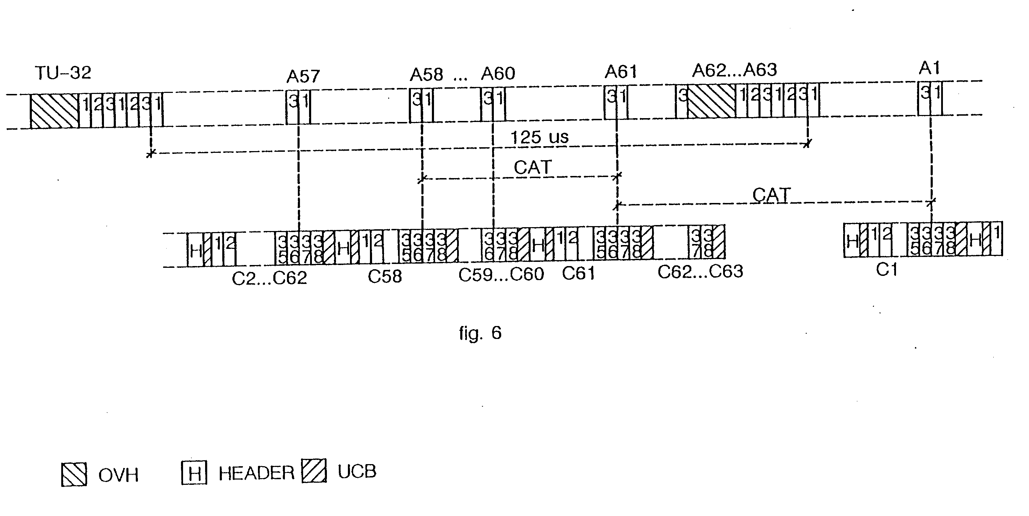

After having described the adaptation procedure of the STM-1 frame and the ATM frame suitable for the transport of the TUs according to the above mentioned principle, now the principle of information transfer from the STM-1 frame will be described which is adapted to the cells of the ATM frame, previously indicated by the term cellization (cell assembly) which is shown as a graphic example in figure 4 for the TU-12s, in figure 5 for the TU-21s and in figure 6 for the TU-32s.

Referring to the figures 4, 5 and 6 within the last 252 columns of the adapted STM-1 frame there are 63 subdivision defined which divide the 252 columns in 63 contiguous intervals of 36 bytes (63X36 = 2268 bytes). A slot cell of the transmitted ATM frame is rigidly linked to each one of the 63 subdivisions, so that the time sequences of the cells and of the associated subdivisions correspond exactly.

In the figures 4, 5 and 6 the mentioned subdivisions are pointed out by the wording AN, and the ATM cells by the wording CN, where N = 1, ..., 63. Beside that in these figures the header of the ATM cell is defined by H, the overhead OVH of the STM-1 frame by hatched lines inclined to the left, and the unused bytes UCB (Unused Cell Bytes) of the ATM cells by hatched lines inclined to the right.

All the bytes of a TU showing up in the time slot finishing by the subdivision associated to the cell suitable for its transport and beginning by the subdivision associated to the preceding cell for the same TU (cellization time indicated in figures 4, 5 and 6 by the wording CAT = Cell Assembly Time) according to the mentioned allocation principle of the cells of the ATM frame, are buffered in order to be enclosed in the payload of the ATM cell at the moment of emitting it. In the case of TU-12 and TU-21 in each cellization period there are always 36 bytes, while in the case of TU-32 there are sometimes 36 and sometimes 38 bytes according to a sequence which depends on which cellization periods are associated to the TU-32.

In order to simplify the cellization procedure the same sequence of allocation of the bytes in the following cells is used for all TU-32: 38, 36, 36, 38, 36, 38 and 36 bytes repeated 3 times.

That allows to transcribe only 36 bytes in the ATM cell when sometimes 38 bytes appear in the cellization period and vice versa.

The sequence has been studies in such a way that for all TU-32s having to transcribe 38 bytes in the ATM cell and having collected only 36, it always turns out that the previous cell carried 38 bytes for a cellization period needing only 36, and thus the temporary buffering of 2 bytes which will be transcribed into the following ATM cell is possible. Now the opposite operation of decellization (cell deassembly) will be described, in which, starting from the ATM cell frame generated according to the previous cellization method, an STM-1 frame is reconstructed structured as the starting adapted frame (figures 3A, 3B, 3C) but with the pointer bytes of the TUs in standard position and in a corrected multiframe phase.

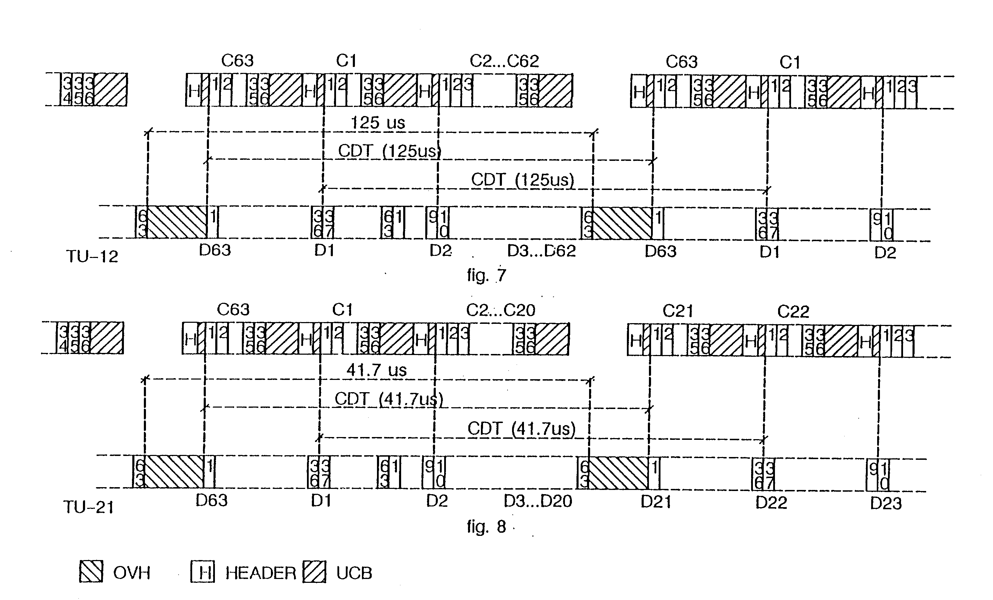

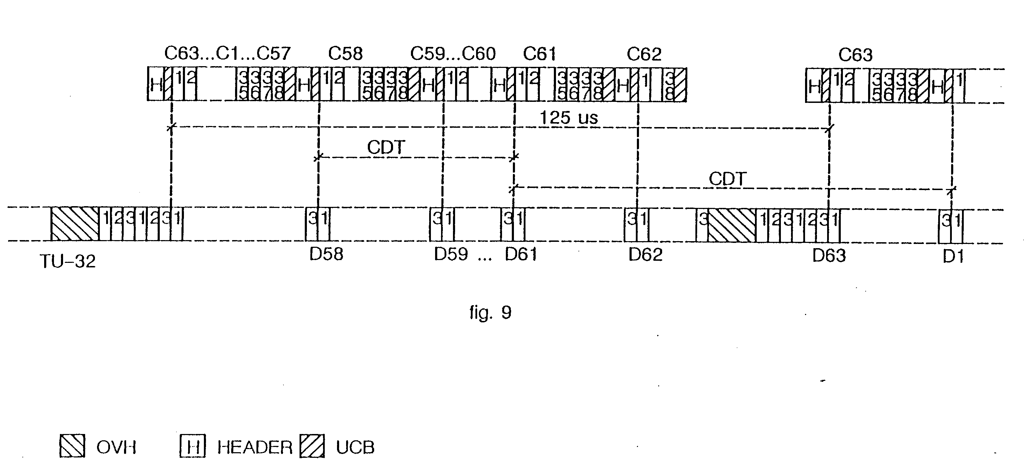

The above mentioned decellization procedure is illustrated by graphic presentations of figure 7 for the TU-12s, of figure 8 for the TU-21 and of figure 9 for the TU-32s.

Referring to these figures 7, 8 and 9, within the last 252 columns of the reconstructed STM-1 frame there are 63 contiguous intervals of 36 bytes defined (63X36=2268 bytes). A cell-slot of the received ATM frame is rigidly linked to each one of the 63 subdivisions as temporary position, in such a way that the temporary sequences of the cells of the associated subdivisions correspond exactly. In figures 7, 8 and 9 the mentioned subdivisions are marked by DN while for the ATM cells, the header of ATM cells (H), the overhead of the STM-1 frame (OVH) and the unused bytes of the ATM cells (UCB) the same previously illustrated graphic symbols with reference to the figures 4, 5 and 6 are used.

The bytes carried by each of the ATM cells are buffered for each TU at the moment of the arrival of the cell and extracted corresponding to the bytes of the TU which occur during the STM-1 frame period which starts the subdivision associated to the actual cell and ends with the subdivision associated to the following cell for the same TU (decellization period indicated in figures 7, 8 and 9 by the wording CDT = Cell Deassembly Time).

In the case of TU-12 and TU-21 in each decellization period there appear always 36 bytes, exactly the number carried by each cell. In the case of TU-32 the bytes asked for in each decellization period do not correspond to the number of bytes received in the relative cell according to the sequence mentioned previously for the cellization, but this sequence is studied in such a way that when for a decellization period 38 bytes are needed and the associated cell carries only 36, it always turns out that the preceding cell carried 38 bytes per decellization period but needing only 36, allowing in this way the temporary buffering of 2 bytes to be used in a following decellizatioin period. In order to make the H bytes of the TU-32s and the V bytes of the TU-12s and TU-21s fall in to the preset standard position in the C-4 it is necessary that in the suitable STM-1 frame before the cellization these are in a proper position inside the column they belong to.

In general if the bytes of a TU after the procedure of cellization turn out transferred by N positions delayed with respect to the original position within the columns, they belong to, the pointer bytes in the STM-1 frame adapted before the cellization must turn out transferred in advance by N positions with respect to the standard position. Besides that, having assigned a multiframe reference for the STM-1 frame set up by the decellization procedure, the V bytes for the TU-12s and TU-21s in the frame adapted before the cellization must be generated according to the multiframe phase corresponding to the frame occurrence in which they will occur in the STM-1 flow set up by the decellization procedure.

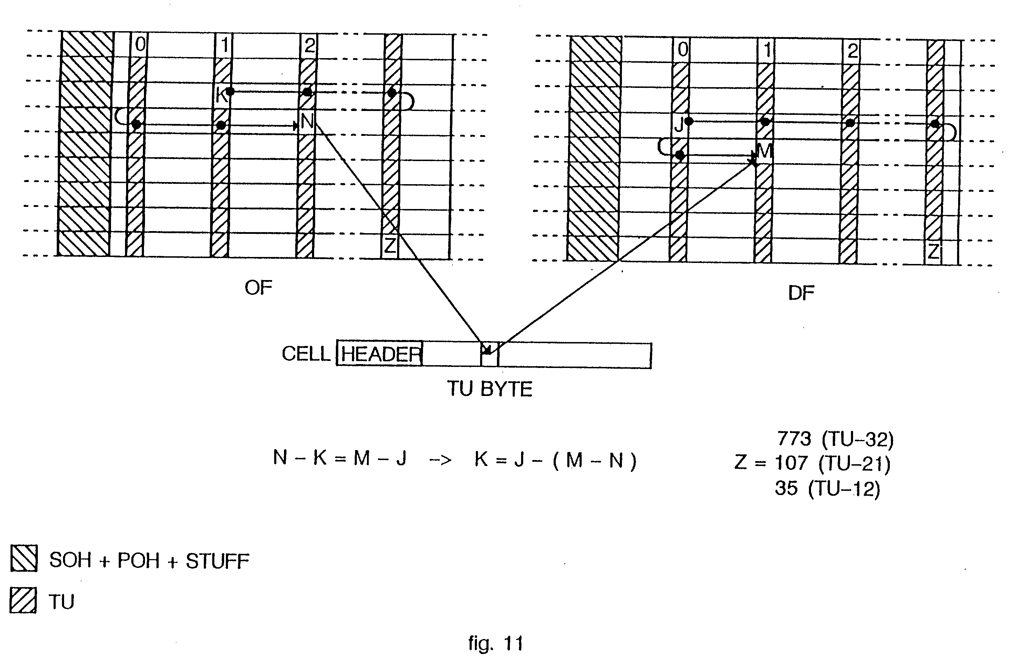

Figure 11 summarizes in a synthetic and schematic way the concepts of the invention.

Referring to this figure, starting from an informative flow arranged as an STM-1 frame (and therefore corresponding to the specifications and international standards) the data flow is structured by an adaptation procedure (Higher Order Path Adaptation) into an Origin Frame (OF), typically inside a switching node. These frames are cellizated and, after the processing of the informations, they are rearranged in a Destination Frame (DF), and from this frame an STM-1 structure is obtained again, which is now sent to the following switching node without further processing at TU level.

The cellization modalities according to the invention are illustrated as follows for the TU-32s.

1. The bytes occupied by a generic TU-32 in the origin and in the destination frames respectively, are numbered by an index from 0 to 773 according to the sequence in which those appear in the time development of the frame.

2. For a TU-32 data in the destination frame the index corresponding to an H byte is indicated by J1 (being situated in a preset standard position within the STM-1 frame and in that of the Origin bytes), while the index corresponding to the same H byte for said TU-332 in the origin frame is indicated by K1.

3. Let's consider a generic cell corresponding to said TU-32 and a generic byte of said TU-32 inside the cell, M1 being the index of this byte in said TU-32 in the destination frame, and N1 being the index of that byte in said TU-32 in the origin frame.

The positional relationship between K1 and J1 is now defined by:

$$K1 = J1-(M1-N1)+774 \text{ for } J1-(M1-N1) < 0$$

$$K1 = J1-(M1-N1) \text{ for } 0 <= J1-(M1-N1) < 774$$

$$K1 = J1-(M1-N1)-774 \text{ for } 774 <= J1-(M1-N1)$$

In the case of TU-21 the bytes taken into consideration are the V bytes and the numbering is done from 0 to 107, and in the above mentioned relation the value 774 is replaced by 108.

In the case of TU-12 the bytes taken into consideration are the V bytes and the numbering is done from 0 to 35, and in the above mentioned relation the value 774 is replaced by 36.

From the point of view of the cellization delay it is evident that whatever will be the chosen allocation for the bytes inside the payload area of the ATM cell provided that it respects the time sequence of arrival of the buffered bytes, sending the cell in a way that the emission of the last used payload byte corresponds to the occurrence of this byte in the cellization period, a minimisation of the cellization-transmission delay of the TU is realized.

However this involves an extreme irregularity of emission of the cells and therefore a consistent needed increase of the transmission speed with scarce exploitation of the transmission channel. This can be reduced by the alignment of the last useful payload byte of the cell with the end of the cellization period as in the example of figures 4, 5 and 6. In this way a minimum increase of the average transmission delay referred to the TUs as a whole, which in this case can be quantized for the TU-12s of about 122 µs with a maximum variance of about +/- 2.5 µs, for the TU-21s of about 40 µs with a maximum variance of about 1.5 µs and for the TU-32s of about 5.2 µs with a maximum variance of about +/- 0.5 µs.

Finally the emission of the cells can be made absolutely regular by cancelling the last irregularity caused by the overhead of the adapted STM-1 frame through the use of an elastic memory for each TUG-3 in which the bytes of the TU-32 are written (86 columns) or those corresponding to the TU-12s and TU-21s (84 columns) and read again by uniform speed within the 125 µs, aligning the cells in the above mentioned way to the cellization subdivisions carried back into this frame.

Generally it is necessary to average the band availability with the allowed delay, and the last solutions pointed out allow to reduce in an extremely consistent way the necessary band at the cost of a slight increment in the transmission delay.

## Claims

1. A method for converting the bytes of a binary data flow organized according to a frame (STM-1) of a synchronous digital hierarchy (SDH) into cells (cellization), such binary data flow including informative structures known as tributary units (TUs), and in particular TU-32s, TU-21s and TU-12s,
    comprising the steps of:

   - generating a frame structure of bytes, set up by a matrix of 9 rows and 270 columns which elements are made up by bytes, each one consisting of 8 bits, such frame developing temporally within 125 µs, row after row, from left to right and from top to bottom,

     in which frame the bytes of a same column belong to the same TU and the bytes corresponding to a particular TU occupy one or more interleaved columns in preset fixed positions, namely 3 by 3 for the TU-32s, 21 by 21 for the TU-21s and 63 by 63 for the TU-12s,
     such frame containing a fraction equal to a fourth of the pointer of the TUs of lower order (TU-21 and TU-12), which pointer is completely issued in 4 separate phases associated to 4 consecutive occurrences of the byte frame structure, or in a multiframe which develops within 500 µs in each of which appears a part of the pointer, said pointer being contained in the V1-V4 bytes for the TU-21s and the TU-12s and in the H bytes for the TU-32s, according to a multiframe synchronism associated to the virtual container (VC) transporting the TUs and with common reference for all TUs transported by this virtual container (VC), said method being characterized in that it further includes the following steps:

   - locating the pointer bytes of the TUs inside the columns of the TUs they belong at positions that are functions of the TU type they belong to (TU-32, TU-21, TU-12),
   - processing the multiframe phase, as a function of the TU type it refers (TU-21, TU-12), of the column position occupied by the TU in the origin byte frame and of the column position occupied by the TU in the destination byte frame.

2. A method according to claim 1, characterized in that it generates, starting from the said byte frame structure, a frame structure of 63 packets or cells, each cell being set up by a header and a payload with fixed length or dimension (L), this frame develops temporally within 125 µs, and in it the cells relative to a same TU occupy one or more fixed preset positions, and in that two subsequent cells associated to the same TU are separated by a number of cells (belonging to other TUs) equal to the number of columns existing between two subsequent columns of said TU in the said origin byte frame, except the overhead columns and fixed stuffing.

3. A method according to claim 2 characterized in that said fix length (L) of the cell is equal to 53 bytes or to 418 bits.

4. A method according to claim 2 or 3 characterized in that said cell frame structure is arranged in 3 groups (G32) of 21 cells, in which the cells of a same group G32 are associated to the same TUG-32 which appear spaced out 3 by 3.

5. A method according to claim 4 characterized in that a control word is associated to each of said G32 groups, relative to the TUG-32, and that it defines the type of content of the TUG, which is used for the construction of the cells relative to each one of said G32 groups.

6. A method according to claim 5, characterized in that the cells relative to one of said G32 groups is set up by assembling a number of consecutive bytes equal to that of the cell dimension (L), which belong to the TU-32 in said input frame structure, excluding the header and stuffing bytes of the TU-32.

7. A method according to claim 5, characterized in that the cells associated to one TU-32 are set up by assembling a number of consecutive bytes belonging to the TU-32 in the frame structure of input bytes according to the following sequence, which will be repeated 3 times: 38 bytes, 36 bytes, 36 bytes, 38 bytes, 36 bytes, 38 bytes, 36 bytes,
    and adding to said bytes of useful information a number of stuffing or header bytes in order to reach said fixed length or dimension of the cell.

8. A method according to claim 5 characterized in that the cells belonging to one of said groups (G32) are arranged in 7 groups (G21) of 3 cells, in which the cells of a same group (G21) are associated to the same TUG-21 and they appear spaced out 7 by 7.

9. A method according to claim 8 characterized in that the cells relative to one of said groups (G21) of 3 cells are set up by assembling a number of consecutive bytes equal to said cell dimension (L) belonging to the TU-21 in said input frame structure with the exclusion of the header and stuffing bytes of the TU-21.

10. A method according to claim 8 characterized in that the cells associated to one TU-21 are set up by assembling a number of 36 consecutive bytes belonging to the TU-21 in the frame structure of input bytes adding to said bytes of useful information a number of stuffing and header bytes in order to realize said cell dimension L.

11. A method according to claim 8 characterized in that the cells belonging to one of said groups (G21) of 3 cells are arranged in 3 groups (G12) of 1 cell, said cell being associated to one TU-12.

12. A method according to claim 11 characterized in that the cells relative to one of said groups (TU-12) of one cell are set up by assembling a number of consecutive bytes equal to that of said cell dimension (L) belonging to the TU-12 in said input frame structure, with the exclusion of the header and stuffing bytes of the TU-12.

13. A method according to claim 11, characterized in that the cells associated to one TU-12 are set up by assembling a number of 36 consecutive bytes belonging to the TU-12 in the frame structure of input bytes, and adding to said bytes of useful information a number of stuffing and header bytes in order to realize said cell dimension (L).

14. A method for converting received data organized as cells through a method according to claims 1 to 3, into output data which are bytes organized according to another frame (STM-1) of the synchronous digital hierarchy (SDH), such bytes being no longer structured in packets or cells, comprising the steps of:

   - forming the bytes of a same column with the bytes belonging to the same TU, with the bytes relative to a same TU occupying one or more interleaved columns in a fixed preset position;
   - allocating in said frame a fraction equal to a fourth of the pointer of lower order (TU-21 and TU-12) so that this pointer is completely supplied in 4 distinct phases associated to 4 consecutive occurrences of the byte frame structure (multiframe) which develops within 500 µs, each phase containing one part of the pointer which is respectively contained in the V1-V4 bytes for the TU-21s and the TU-12s and in the H bytes for the TU-32s, according to a multiframe synchronism associated to the virtual container (VC) carrying the TUs, said synchronism being a common reference for all TUs carried by said virtual container (VC).

15. A method according to claim 14 applied to a cell structure according to claim 6, characterized in setting up a number (L) of consecutive bytes (equal to said cell dimension) belonging to a same TU-32 in said frame structure of output bytes, with the exception of the header and stuffing bytes of the TU-32, using all L bytes of a cell of the G32 group associated to said TU-32.

16. A method according to claim 14 applied to a cell structure according to claim 7, characterized in that a number of consecutive bytes belonging to the same TU-32 in said frame structure of output bytes, is set up by taking into consideration only the cells belonging to said G32 group associated to said TU-32, extracting from said cell only the information bytes and separating the header and stuffing bytes.

17. A method according to claim 16, characterized in that the cells of said G32 group supply each one a number of said information bytes, according to the following sequence, which is repeated three times: 38 bytes, 36 bytes, 36 bytes, 38 bytes, 36 bytes, 38 bytes, 36 bytes.

18. A method according to claim 14 applied to a cell structure according to claim 9, characterized in that a number (L) (equal to said cell dimension) of consecutive bytes belonging to the same TU-21 in said frame structure of output bytes, with the exception of the header and stuffing bytes of the TU-21, is set up using all L bytes of a cell of said G21 group associated to said TU-21.

19. A method according to claim 14 applied to a cell structure according to claim 10, characterized in that 36 consecutive bytes belonging to one TU-21 in the frame structure of output bytes are assembled by extracting from each cell relative to one of said G12 groups the 36 information bytes and putting aside the header and stuffing bytes.

20. A method according to claim 14 applied to a cell structure according to claim 11, characterized in that a number (L) (equal to said cell dimension) of consecutive bytes belonging to the same TU-12 in said frame structure of output bytes, with the exception of the header and stuffing bytes of the TU-12, is set up by using all L bytes of a cell of said G12 group associated to said TU-12.

21. A method according to claim 14 applied to a cell structure according to claim 13, characterized in that 36 consecutive bytes belonging to one TU-12 in the frame structure of output bytes are assembled by extracting from each cell relative to one of said G12 groups the 36 information bytes and putting aside the header and stuffing bytes.

22. A method for the positioning of the H pointer bytes relative to a TU-32 tributary unit, in the passage from an origin byte frame to a frame structure of 63 packets or cells, and then to a destination byte frame of binary data flow where the H bytes are in a preset standard position,

comprising the step of numbering the bytes occupied by a generic TU-32 in the origin and destination byte frames, respectively, by an index from 0 to 773 according to the sequence in which these appear in the temporal development of the frame,
said method being characterized in that it further includes the steps of selecting the indexes K1 and J1, relative to the same H bytes of a given TU-32, respectively in the origin byte frame and in the destination byte frame, and for a generic cell relative to a TU-32 and a generic byte of said TU-32 inside of said cell, in such a manner that:

$$K1=J1-(M1-N1)+774 \text{ for } J1-(M1-N1) < 0$$

$$K1=J1-(M1-N1) \text{ for } 0 <= J1-(M1-N1) < 774$$

$$K1=J1-(M1-N1)-774 \text{ for } 774 <= J1-(M1-N1)$$

where

M1 is the index of the byte in said TU-32 in the destination byte frame, and
N1 is the index of the byte in said TU-32 in the origin byte frame.

23. A method for the positioning of the V pointer bytes relative to a TU-21 tributary unit, in the passage from an origin byte frame to a frame structure of 63 packets or cells, and then to a destination byte frame of a binary data flow in which the V bytes are in a preset standard position,

comprising the step of numbering the bytes occupied by a generic and destination byte frames, respectively, by an index from 0 to 107 according to the sequence in which these appear in the temporal frame development,
said method being characterized in that it further includes the step of selecting the indexes K2 and J2, relative to the same V byte of a given TU-21, respectively in the origin byte frame and in the destination byte frame, and for a generic cell relative to a TU-21 and a generic byte of said TU-21 inside of said cell, in such a manner that:

$$K2=J2-(M2-N2)+108 \text{ for } J2-(M2-N2) < 0$$

$$K2=J2-(M2-N2) \text{ for } 0 <= J2-(M2-N2) < 108$$

$$K2=J2-(M2-N2)-108 \text{ for } 108 <= J2-(M2-N2)$$

where

M2 is the index of the byte of said TU-21 in the destination byte frame, and
N1 is the index of the byte in said TU-21 in the origin byte frame.

24. A method for the positioning of the V pointer bytes relative to a TU-12 tributary unit, in the passage from an origin byte frame to a frame structure of 63 packets or cells, and then to a destination byte frame of a binary data flow in which the V bytes are in a preset standard position,

comprising the step of numbering the bytes occupied by a generic and destination byte frames, respectively, by an index from 0 to 35 according to the sequence in which these appear in the temporal frame development,
said method being characterized in that it further includes the step of selecting the indexes K3 and J3, relative to the same V byte of a given TU-12, respectively in the origin byte frame and in the destination byte frame, and for a generic cell relative to a TU-12 and a generic byte of said TU-12 inside of said cell, in such a manner that:

$$K3=J3-(M3-N3)+36 \text{ for } J3-(M3-N3) < 0$$

$$K3=J3-(M3-N3) \text{ for } 0 <= J3-(M3-N3) < 36$$

K3=J3-(M3-N3)-36 for 36 <= J3-(M3-N3)

where

M3 is the index of the byte in said TU-12 in the destination byte frame, and
N3 is the index of the byte in said TU-12 in the origin byte frame.

**Patentansprüche**

1. Verfahren zur Konvertierung der Bytes eines binären Datenflusses, der entsprechend einem Rahmen (STM-1) einer synchronen, digitalen Rangordnung (SDH) organisiert ist, in Zellen (Zellisierung), wobei dieser binäre Datenfluß informative Strukturen einschließt, die als Untersystemeinheiten (TUs) und zwar TU-32s, TUS-21s und TU-12s bekannt sind,
und dieses Verfahren schließt folgende Schritte ein:

   - Erzeugung einer Bytesrahmenstruktur, die sich aus einer Matrix mit 9 Zeilen und 270 Spalten zusammensetzt, deren Elemente aus sich aus 8 Bits zusammensetzende Bytes bestehen, wobei sich diese Rahmen zeitlich innerhalb von 125 μs Zeile um Zeile von links nach rechts und von oben nach unten entwickeln,

     und in diesem Rahmen gehören die Bytes der selben Spalte zur selben TU und die Bytes, die einer besonderen TU entsprechen, belegen eine oder mehrere verschachtelte Spalten in vorab bestimmten festen Positionen, nämlich 3 zu 3 für die TU-32s, 21 zu 21 für die TU-21s und 63 zu 63 für die TU-12s,
     dieser Rahmen umfaßt eine Fraktion enthalten, die gleich einem Viertel des Pointers der TUs niedriger Ordnung (TU-21, TU-12) ist, wobei dieser Pointer gänzlich in 4 separaten Phasen verbunden mit 4 aufeinanderfolgenden Auftreten der Byterahmenstruktur ausgegeben wird, oder in einem Vielfachrahmen, der sich innerhalb von 500 μs entwickelt, in jedem von denen ein Teil des Pointers erscheint, wobei der genannte Pointer in den V1-V4 Bytes für die TU-21s und die TU-12s und in den H Bytes für die TU-32s enthalten ist entsprechend einem Vielfachrahmensynchronismus verbunden mit dem virtuellen Behälter (VC), der die TUs transportiert, und mit gemeinsamer Referenz für alle durch diesen virtuellen Behälter (VC) transportierten TUs,

   und das genannte Verfahren wird dadurch gekennzeichnet, daß es weiterhin folgende Schritte umfaßt:

   - Lokalisierung der Pointer-Bytes der TUs innerhalb der Spaltender TUs, zu denen sie gehören, in Positionen, die Funktionen des TU-Typs sind, zu denen sie gehören (TU-32, TU-21, TU-12),
   - Verarbeitung der Vielfachrahmenphase als eine Funktion des TU-Typs zu dem sie gehört (TU-21, TU-12), mit der Spaltenposition, die die TU im ursprünglichen Byterahmen belegt, und der Spaltenposition, die durch die TU im Bestimmungsbyterahmen belegt wird.

2. Verfahren entsprechend Anspruch 1, dadurch gekennzeichnet, daß es ausgehend von der genannten Byterahmenstruktur eine Rahmenstruktur von 63 Paketen oder Zellen erzeugt, wobei jede Zelle aus einem Header und einer Payload mit fester Länge und Dimension (L) besteht, dieser Rahmen entwickelt sich zeitlich innerhalb von 125 μs und in ihm belegen die zur selben TU gehörenden Zellen eine oder mehrere vorab festgesetzte Positionen, und dadurch, daß zwei aufeinanderfolgende, mit der selben TU verbundene Zellen durch eine Anzahl von Zellen (die zu anderen TUs gehören) separiert werden, wobei diese Anzahl von Zellen gleich der Anzahl von Spalten ist, die zwischen zwei aufeinanderfolgenden Spalten der genannten TU im genannten ursprünglichen Byterahmen existieren, abgesehen von den Overhead-Spalten und fester Füllung.

3. Verfahren entsprechend Anspruch 2, dadurch gekennzeichnet, daß die genannte feste Länge (L) der Zelle gleich 53 Bytes oder 418 Bits ist.

4. Verfahren entsprechend Anspruch 2 oder 3, dadurch gekennzeichnet, daß die genannte Zellrahmenstruktur in drei Gruppen (G32) von 21 Zellen angeordnet ist, in denen die Zellen der selben Gruppe G32 mit der selben TUG-32 verbunden sind, welche 3 zu 3 von einander entfernt sind.

5. Verfahren entsprechend Anspruch 4, dadurch gekennzeichnet, daß ein Kontrollwort mit jeder der genannten G32 Gruppen in Verbindung mit der TUG-32 verbunden ist, und dadurch daß es die Art des Inhalts der TUG definiert, welche für die Konstruktion der Zellen in Verbindung mit den jeweiligen genannten G32 Gruppen benutzt wird.

6. Verfahren nach Anspruch 5, dadurch gekennzeichnet, daß die Zellen in Verbindung mit einer der G32 Gruppen durch das Zusammenfügen einer Anzahl von aufeinanderfolgenden Bytes, die gleich der Zelldimension (L) ist, gebildet werden, wobei diese Bytes zur TU-32 in der genannten Eingangsrahmenstruktur ausschließlich der Header- und Füllbytes der TU-32 gehören.

7. Verfahren nach Anspruch 5, dadurch gekennzeichnet, daß die Zellen verbunden mit einer TU-32 durch das Zusammenfügen einer Anzahl von aufeinanderfolgenden Bytes gebildet werden, die zur TU-32 in der Rahmenstruktur von Eingangsbytes entsprechend der folgenden Sequenz gehören, welche dreimal wiederholt wird: 38 Bytes, 36 Bytes, 36 Bytes, 38 Bytes, 36 Bytes, 38 Bytes, 36 Bytes, und durch Hinzufügen zu den genannten Bytes von nützlicher Information und einer Anzahl von Füll- der Headerbytes, um die genannte festgelegte Länge oder Dimension der Zelle zu erreichen.

8. Verfahren nach Anspruch 5, dadurch gekennzeichnet, daß die zu einer genannten Gruppen (G32) gehörenden Zellen in 7 Gruppen (G21) von 3 Zellen angeordnet sind, in denen die Zellen der selben Gruppe (G21) mit der selben TUG-21 in der genannten Eingangsrahmenstruktur verbunden sind und sie resultieren 7 zu 7 voneinander distanziert.

9. Verfahren nach Anspruch 8, dadurch gekennzeichnet, daß die Zellen in Verbindung mit einer der genannten Gruppen (G21) von 3 Zellen werden durch das Zusammenfügen einer Anzahl von aufeinanderfolgenden Bytes gleich der genannten Zelldimension (L) gebildet werden, die zur TU-221 in der genannten Eingangsrahmenstruktur gehören mit Ausnahme der Header- und Füllbytes der TU-21.

10. Verfahren nach Anspruch 8, dadurch gekennzeichnet, daß die mit einer TU-21 verbundenen Zellen durch das Zusammenfügen einer Anzahl von 36 aufeinanderfolgenden Bytes gebildet, die zur TU-21 in einer Rahmenstruktur von Eingangsbytes gehören, wobei den Nutzinformationsbytes eine Anzahl von Füll- und Headerbytes hinzugefügt werden, um so die genannte Zelldimension L zu verwirklichen.

11. Verfahren nach Anspruch 8, dadurch gekennzeichnet, daß die zu einer der genannten Gruppen (G21) von 3 Zellen gehörenden Zellen in 3 Gruppen (G12) von 1 Zelle angeordnet sind, wobei die genannte Zelle mit einer TU-12 verbunden ist.

12. Verfahren nach Anspruch 11, dadurch gekennzeichnet, daß die Zellen in Verbindung mit einer der Gruppen (TU-12) von einer Zelle durch das Zusammenfügen einer Anzahl von aufeinanderfolgenden Bytes gleich der der genannten zur TU-12 gehörenden Zelldimension (L) in der genannten Eingangsrahmenstruktur gebildet werden, und zwar mit Ausnahme der Header- und Füllbytes der TU-12.

13. Verfahren nach Anspruch 11, dadurch gekennzeichnet, daß die mit einer TU-12 verbundenen Zellen durch das Zusammenfügen einer Anzahl von 36 aufeinanderfolgenden, zur TU-12 in der Rahmenstruktur von Eingangsbytes gebildet werden und durch Hinzufügen zu den Bytes nützlicher Informationen eine Anzahl von Füll- und Headerbytes, um die genannte Zelldimension (L) zu verwirklichen.

14. Verfahren zur Konvertierung von als Zellen angeordneten Daten durch ein Verfahren entsprechen den Ansprüchen von 1 bis 3 in Ausgangsdaten, welche entsprechend einem anderen Rahmen (STM-1) angeordnete Bytes der synchronen digitalen Rangordnung (SDH) sind, wobei diese Bytes nicht mehr in Paketen oder Zellen angeordnet sind, und das Verfahren umfaßt die folgenden Schritte:

- Bilden der Bytes der selben Spalte mit den zur selben TU gehörenden Bytes mit den Bytes verbunden mit der selben TU, welche eine oder mehrere verschachtelte Spalten in einer vorab festgelegten Position belegen;
- Im genannten Rahmen Zuweisung einer Fraktion gleich einem Viertel des Pointers der niedrigeren Größenordnung (TU-21 und TU-12), so daß dieser Pointer ganz in vier getrennten Phasen geliefert wird, die mit 4 aufeinanderfolgenden Auftreten der Byterahmenstruktur (Vielfachrahmen) verbunden sind, die sich innerhalb von 500 μs entwickeln, wobei jede Phase einen Teil des Pointers enthält, welche für die TU-21s und die TU-12s in den V1-V4 Bytes beziehungsweise für die TU-32 in den H Bytes enthalten sind, entsprechend einem Vielfachrahmensynchronismus verbunden mit dem die TUs transportierenden virtuellen Behälter (VC), wobei der genannte Synchronismus eine gemeinsame Referenz für alle durch den genannten virtuellen Behälter (VC) transportierte TUs ist.

15. Verfahren nach Anspruch 14 angewendet an einer Zellstruktur nach Anspruch 6, dadurch gekennzeichnet, daß eine Anzahl (L) von aufeinanderfolgenden Bytes (gleich der Zelldimension) gebildet wird, die zu einer selben TU-32 in der genannten Rahmenstruktur von Ausgangsbytes gehören, mit Ausnahme der Header- und Füllbytes der TU-32, wobei alle L Bytes einer Zelle der mit der genannten TU-32 verbundenen G32 Gruppe benutzt werden.

16. Verfahren nach Anspruch 14 angewendet bei allen Zellstrukturen nach Anspruch 7, dadurch gekennzeichnet, daß eine Anzahl von aufeinanderfolgenden, zur selben TU-32 in der genannten Rahmenstruktur von Ausgangsbytes gehörenden Bytes, durch das Inbetrachtziehen nur der Zellen, die zur genannten G32 Gruppe verbunden mit der genannten TU-32 gehören, gebildet wird, wobei aus der genannten Zelle nur die Informationsbytes extrahiert und die Header- und Füllbytes getrennt werden.

17. Verfahren nach Anspruch 16, dadurch gekennzeichnet, daß die Zellen der genannten G32 Gruppe je eine Anzahl von den genannte Informationsbytes liefern, entsprechend der folgenden Sequenz, die dreimal wiederholt wird: 38 Bytes, 36 Bytes, 36 Bytes, 38 Bytes, 36 Bytes, 38 Bytes, 36 Bytes.

18. Verfahren nach Anspruch 14 angewendet bei einer Zellstruktur nach Anspruch 9, dadurch gekennzeichnet, daß eine Anzahl (L) (gleich der genannten Zelldimension) von aufeinanderfolgenden Bytes der selben TU-21 in der genannten Rahmenstruktur von Ausgangsbytes, mit Ausnahme der Header- und Füllbytes der TU-21, gebildet wird indem alle L Bytes einer Zelle der genannten G21 Gruppe verbunden mit der genannten TU-21 benutzt werden.

19. Verfahren nach Anspruch 14 angewendet bei einer Zellstruktur nach Anspruch 10, dadurch gekennzeichnet, daß 36 aufeinanderfolgende, zu einer TU-21 in der selben Rahmenstruktur von Ausgangsbytes gehörenden Bytes zusammengefügt werden, indem von jeder Zelle verbunden mit einer der G12 Gruppen die 36 Informationsbytes extrahiert und die Header- und Füllbytes ausgeschlossen werden.

20. Verfahren nach Anspruch 14 angewendet bei einer Zellstruktur nach Anspruch 11, dadurch gekennzeichnet, daß eine Anzahl (L) (gleich der Zelldimension) von aufeinanderfolgenden Bytes, die zur selben TU-12 in der genannten Rahmenstruktur von Ausgangsbytes gehören, mit Ausnahme der Header- und Füllbytes der TU-12, gebildet wird, indem alle L Bytes einer Zelle der genannten G12 Gruppe verbunden mit der genannten TU-12 benutzt wird.

21. Verfahren nach Anspruch 14 angewendet bei einer Zellstruktur nach Anspruch 13, dadurch gekennzeichnet, daß 36 aufeinaderfolgende Bytes, die zu einer TU-12 in der Rahmenstruktur von Ausgangsbytes gehören, zusammengefügt werden, indem von jeder Zelle in Verbindung mit einer der genannten G12 Gruppen die 36 Informationsbytes extrahiert und die Header- und Füllbytes weggelassen werden.

22. Verfahren zur Positionierung der H Pointerbytes in Verbindung mit einer TU-32 Untersystemeinheit beim Übergang von einem Ursprungsbyterahmen zu einer Rahmenstruktur von 63 Paketen oder Zellen, und dann zu einem Bestimmungsbyterahmen eines binären Datenflusses, wo die H Bytes in einer vorbestimmten Standardposition sind,

wobei das Verfahren den Schritt des Numerierens der Bytes einschließt, die durch eine generische TU-32 in den Ursprungs- beziehungsweise Bestimmungsbyterahmen und durch einen Index von 0 bis 773 entsprechend der Folge, in der diese in der zeitlichen Entwicklung des Rahmens auftauchen, belegt sind, und das genannte Verfahren wird dadurch gekennzeichnet, daß es weiter die Schritte des Auswählens der Indexe K1 und J1 in Verbindung mit den selben H Bytes einer gegebenen TU-32 im Ursprungs- beziehungsweise Bestimmungsbyterahmen, und für eine generische Zelle in Verbindung mit einer TU-32 und einem generischen Byte der genannten TU-32 innerhalb der genannten Zelle, auf solche Weise, daß:

$$K1=J1-(M1-N1)+774 \text{ für } J1-(M1-N1) < 0$$

$$K1=J1-(M1-N1) \text{ für } 0 <= J1-(M1-N1) < 774$$

$$K1=J1-(M1-N1)-774 \text{ für } 774 <= J1-(M1-N1)$$

wo

M1 der Index des Bytes in der genannten TU-32 im Bestimmungsbyterahmen, und N1 der Index des Bytes in der genannten TU-32 im Ursprungsbyterahmen ist.

23. Verfahren zur Positionierung der V Pointerbytes in Verbindung mit einer TU-21 Untersystemeinheit beim Übergang von einem Ursprungsbyterahmen zu einer Rahmenstruktur von 63 Paketen oder Zellen, und dann zu einem Bestimmungsbyterahmen eines binären Datenflusses, in dem die V Bytes sich in einer vorbestimmten Standardposition befinden,

und das Verfahren schließt den Schritt des Numerierens der Bytes ein, die von einem generischen Byterahmen und Bestimmungsbyterahmen beziehungsweise einem Index von 0 bis 107 entsprechend der Folge belegen, in der diese in der zeitlichen Rahmenentwicklung erscheinen, und das genannte Verfahren wird dadurch gekennzeichnet, daß es weiter den Schritt der Auswahl der Indexe K2 und J2 einschließt verbunden mit dem selben V Byte einer gegebenen TU-21 im Ursprungsbyterahmen beziehungsweise im Bestimmungsbyterahmen, und für eine generische Zelle verbunden mit einer TU-21 und einem generischen Byte der genannten TU-21 innerhalb der genannten Zelle, auf solche Weise, daß:

$$K2=J2-(M2-N2)+108 \text{ für } J2-(M2-N2) < 0$$

$$K2=J2-(M2-N2) \text{ für } 0 <= J2-(M2-N2) < 108$$

$$K2=J2-(M2-N2)-108 \text{ für } 108 <= J2-(M2-N2)$$

wo

M2 der Index des Bytes der- genannten TU-21 im Bestimmungsbyterahmen und N2 der Index des Bytes in der genannten TU-21 im Ursprungsbyterahmen ist.

24. Verfahren für das Einstellen der V Pointerbytes in Verbindung mit einer TU-12 Untersystemeinheit im Übergang von einem Ursprungsbyterahmen zu einer Rahmenstruktur von 63 Paketen oder Zellen und dann zu einem Bestimmungsbyterahmen eines binären Datenflusses, in dem die V Bytes sich in einer vorbestimmten Standardposition befinden,

wobei das Verfahren den Schritt der Numerierung der durch einen generischen Byterahmen beziehungsweise Bestimmungsbyterahmen belegten Bytes durch einen Index von 0 bis 35 umfaßt, entsprechend der Folge, in der diese in der zeitlichen Entwicklung des Rahmens erscheinen,
und das genannte Verfahren wird dadurch gekennzeichnet, daß es darüberhinaus den Schritt der Auswahl der. Indexe K3 e J3 in Verbindung mit dem selben V Byte einergegebenen TU-12 im Ursprungsbyterahmen beziehungsweise im Bestimmungsbyterahmen, und für eine generische Zelle in Verbindung mit einer TU-12 und einem generischen Byte der genannten TU-12 innerhalb der genannten Zelle, so daß:

$$K3=J3-(M3-N3)+36 \text{ für } J3-(M3-N3) < 0$$

$$K3=J3-(M3-N3) \text{ für } 0 <= J3-(M3-N3) < 36$$

$$K3=J3-(M3-N3)-36 \text{ für } 36 <= J3-(M3-N3)$$

wo

M3 der Index des Bytes in der genannten TU-12 im Bestimmungsbyterahmen und N3 der Index des Bytes in der genannten TU-12 im Ursprungsbyterahmen ist.

## Revendications

1. Méthode pour la cellulisation des octets d'un débit de données binaire arrangés selon une trame (STM-1) d'une hiérarchie digitale synchrone (SDH) en unités de données (cellulisation), tels débits de données comprennent des structures informatives connues comme unités tributaires (TUs), et en particulier TU-32s, TU-21s et TU-12s,

comprenant le pas de:

- génération d'une structure de trame d'octets formée par une matrice de 9 lignes et 270 colonnes, dont les éléments sont faits d'octets, chacun d'eux consiste en 8 bits, telle trame se produit temporellement en 125 µs, ligne par ligne, de gauche à droite et d'en haut en bas,

dans cette trame les octets d'une même colonne appartiennent à la même TU et les octets correspondants à une TU particulière occupent une ou plusieurs colonnes dans des positions fixes présélectionnées, c'est à dire 3 par trois pour les TU-32s, 21 par 21 pour les TU-21s et 63 par 63 pour les TU-12s,
ces trames contiennent une fraction égale à un quatrième du pointeur des TUs d'ordre inférieur (TU-21 et TU-12), tel pointeur étant fourni complètement en 4 phases séparées associées à 4 événements consécutifs de la structure de trame d'octets, ou dans une trame multiple, qui se développe dans l'arc de 500 µs dans chacune desquelles apparaît une part du pointeur, le dît pointeur étant contenu dans les octets V1-V4 pour les TU-21s et TU-12s et dans les octets H pour les TU-32s selon un synchronisme de trames multiples associé au conteneur virtuel VC transportant les TUs et avec référence commune pour toutes les TUs transportées par ce conteneur virtuel (VC),
la dite méthode étant caractérisée en ce qu'elle comprend en plus les phases suivantes:

- localisation des octets de pointeur des TUs à l'intérieur des colonnes des TUs auxquelles elles appartiennent dans des positions, qui sont des fonctions du type de la TU à laquelle elles appartiennent (TU-32, TU-21, TU-12);

- élaboration de la phase de trame multiple comme une fonction du type de TU, qu'elle réfère (TU-21, TU-12) de la position de colonne occupée par la TU dans la trame d'octets d'origine et de la position de colonne occupée par la TU dans la trame d'octets de destination.

2. Méthode selon la revendication 1, caractérisée en ce qu'elle génère en partant de la dite structure de trame d'octets une structure de trame de 63 paquets ou unités de données, chaque unité de données étant formée par une en-tête et une charge utile de longueur ou dimension fixe (L), cette trame se développe temporairement dans l'arc de 125 μs, et dans celle-ci les unité de données relatives à une même TU occupent une ou plusieurs positions fixes présélectionnées, et. que deux unités de données successives associées à la même TU sont séparées par un nombre d'unités de données (qui appartiennent à d'autres TUs) égal au numéro de colonnes qui se trouvent entre deux colonnes successives de la dite TU dans la dite trame d'octets d'origine à l'exception des colonnes d'overhead et de rembourrage fixe.

3. Méthode selon la revendication 2, caractérisée en ce que la dite longueur (L) de l'unité de données est égale à 53 octets ou à 418 bits.

4. Méthode selon la revendication 2 ou 3, caractérisée en ce que la dite structure de trame d'unités de données est arrangée en trois groupes (G32) de 21 unités de données, dans lesquels les unités de données du -même groupe G32 sont associées au même TUG-32 e elles se présentent écartées 3 par 3.

5. Méthode selon la revendication 4, caractérisée en ce que une parole de contrôle est associée à chacun des groupes G32 relatifs au TUG-32, et qui définit le type de contenu du TUG, qui est utilisé pour la construction des unités de données relatives à chacun des groupes G32.

6. Méthode selon la revendication 5, caractérisée en ce que les'unités de données relatives à un des dits groupes G32 sont formées par l'assemblage d'un nombre d'octets consécutifs égal à celui de la dimension d'unité de données (L), qui appartiennent à la TU-32 dans la dite structure de trame d'entrée à l'exclusion des octets d'en-tête et de rembourrage de la TU-32.

7. Méthode selon la revendication 5, caractérisée en ce que les unités de données associées à une TU-32 sont formées en assemblant un nombre d'octets consécutifs appartenants à la TU-32 dans la structure de trame d'entrée selon la séquence suivante, qui sera répétée.tris fois: 38 octets, 36 octets, 36 octets, 38 octets, 36 octets, 38 octets, 36 octets,
et en additionnant au dits octets d'information utile un nombre d'octets de rembourrage et d'entêtes pour arriver à la dite longueur ou dimension fixe de l'unité de données.

8. Méthode selon la revendication 5, caractérisée en ce que les unités de données, qui appartiennent à un des dits groupes (G32) sont arrangées en 7 groupes (G21) de trois unités -de données, dans lesquels les unités de données du même groupe (G21) sont associées au même TUG-21 et elles se présentent écartées 7 par 7.

9. Méthode selon la revendication 8, caractérisée en ce que les unités de données relatives à un des dits groupes (G21) de 3 unités de données sont formées en assemblant un nombre d'octets consécutifs égal à la dite dimension d'unité de données (L) appartenants à la TU-21 dans la dite structure de trame d'entrée à l'exclusion des octets d'en-tête et de rembourrage de la TU-21.

10. Méthode selon la revendication 8, caractérisée en ce que les unités de données associées à une TU-21 sont formées en assemblant un nombre de 36 octets consécutifs appartenants à la TU-21 dans la structure de trame d'octets d'entrée en additionnant aux dits octets d'information utile un nombre d'octets de rembourrage et d'en-tête pour réaliser la dite dimension d'unité de données L.

11. Méthode selon la revéndication 8, caractérisée en ce que les unités de données appartenantes à un des groupes (G21) de 3 unités de données sont arrangées en 3 groupes (G12) d'une unité de données, la dite unité de données étant associées à une TU-12.

12. Méthode selon la revendication 11, caractérisée en ce que les unités de données relatives à un des dits groupes (TU-12) d'unité de données sont formées en assemblant un nombre d'octets consécutifs égal à celui de la dite dimension d'unité de données (L) appartenantes à la TU-12 dans la dite. structure de trame d'entrée à l'exception des octets d'en-tête et de rembourrage de la TU-12.

13. Méthode selon la revendication 11, caractérisée en ce que les unités de données associées à une TU-12 sont formées en assemblant un nombre de 36 octets consécutifs appartenants à la TU-12 dans la structure de trame d'octets d'entrée, et en additionnant aux dits octets d'information utile un nombre d'octets d'en-tête et de rembourrage pour réaliser la dite dimension d'unité de données (L).

**14.** Méthode pour la conversion de données reçues organisées comme unités de données par une méthode selon les revendications de 1 à 3 en données de sortie, qui sont des octets arrangés selon une autre trame (STM-1) de la hiérarchie digitale synchrone (SDH), tels octets étant non plus structurés en paquets ou unités de données,

qui comprend les phases de:

- formation d'octets- d'une même colonne avec les octets relatifs à une TU, qui occupe une ou plusieurs colonnes interfoliées dans une position fixe présélectionnée;

- allocation dans les dites trames une fraction égale à un quatrième du pointeur d'un ordre inférieur (TU-21 et TU-12), de manière que ce pointeur est complètement fourni en 4 phases distinctes associées à 4 événements consécutifs de structure de trames d'octets (trames multiples), qui se développent dans l'arc de 500 µs, chaque phase contient une part du pointeur, qui est respectivement contenu dans les octets V1-V4 pour les TU-21s et les TU-12s et dans les octets H pour les TRU-32s selon un synchronisme de trame multiple associé au conteneur virtuel (VC) transportant les TUs, le dît synchronisme étant une référence commune pour toutes les TUs transportées par le dît conteneur virtuel (VC).

**15.** Méthode selon la revendication 14 appliquée à une structure d'unités de données selon la revendication 6, caractérisée en ce qu'elle met ensemble un nombre (L) d'octets consécutifs (égal à la dite dimension d'unité de données) appartenants à une même TU-32 dans la dite structure de trame d'octets en sortie, à l'exception des octets d'en-tête et de rembourrage de la TU-32, utilisant tous les L octets d'une unité. de données du dît group G32 associé à la dite TU-32.

**16.** Méthode selon la revendication 14 appliquée à une structure d'unité de données selon la revendication 7, caractérisée en ce qu'un nombre d'octets consécutifs appartenants à la même TU-32 dans la dite structure de trame d'octets en sortie est construit en prenant en considération seulement les unités de données appartenantes au dît group G32 associé à la dite TU-32 en extrayant de la dite unité de données seulement les octets d'information et en séparant les octets d'en-tète et de rembourrage.

**17.** Méthode selon la revendication 16, caractérisée en ce que les unités de données du dît groupe G32 fournissent chacun un nombre des dits octets d'information selon la séquence suivante, qui est répétée trois fois: 38, octets, 36 octets, 36 octets, 38 octets, 36 octets, 38 octets, 36 octets.

**18.** Méthode selon la revendication 14 appliquée à une structure d'unités de données selon la revendication 9, caractérisée en ce que un nombre (L) (égal à la dite dimension d'unité de données) d'octets consécutifs appartenants à la même TU-21 dans la dite structure de trame d'octets en sortie à l'exception des octets d'en-tête et de rembourrage de la TU-21, est construit en utilisant tous les L octets d'une unité de données du dît groupe G21 associé à la dite TU-21.

**19.** Méthode selon la revendication 14 appliquée à une structure d'unité de données selon la revendication 10, caractérisée en ce que 36 octets consécutifs appartenants à une TU-21 dans la structure de trame d'octets en sortie sont assemblés en extrayant de chaque unité de données relative à un des dits groupes G12 les 36 octets d'information et en écartant les octets d'en-tête et de rembourrage.

**20.** Méthode selon la revendication 14 appliquée à une structure d'unité de données selon la revendication 11, caractérisée en ce que un nombre (L) (égal à la dite dimension d'unité de données) d'octets consécutifs appartenants à la même TU-12 dans la dite structure de trame d'octets en sortie, à l'exception des octets d'en-tête et de rembourrage de la TU-12, est construit en utilisant tous les L octets d'une unité de données du dît groupe G12 associé à la dite TU-12.

**21.** Méthode selon la revendication 14 appliquée à une structure d'unité de données selon la revendication 13, caractérisée en ce que 36 octets consécutifs appartenants à une TU-12 dans une structure de trame d'octets en sortie sont assemblés en extrayant de chaque unité de données relative à un des dits groupes G12 les 36 octets d'information et en écartant les octets d'en-tête et de rembourrage.

**22.** Méthode pour le positionnement des octets H de pointeur relatifs à une unité tributaire TU-32 dans le passage d'une trame d'octets d'origine à une structure de trame de 63 paquets ou unités dé données et puis à une trame d'octets de destination d'un débit de données binaire, où le octets H se trouvent dans une position standard présélectionnée,

telle méthode comprend la phase de numéroter les octets occupés par une TU-32 générique dans les trames d'octet d'origine et de destination, respectivement, par un index de 0 à 773 selon la séquence, dans laquelle ceux-ci apparaissent dans le développement temporaire de la trame,

la dite méthode étant caractérisée en ce qu'elle comprend en plus la phase de sélectionner les index K1 et J1, relatifs aux mêmes octets H d'une TU-32 donnée, respectivement dans la trame d'octet d'origine et dans la trame d'octet de destination, et pour une unité de données générique relative à une TU-32 et un octet générique de la dite TU-32 à l'intérieur de la dite unité de données, de telle manière que:

$$K1=J1-(M1-N1)+774 \text{ pour } J1-(M1-N1) < 0$$

$$K1=J1-(M1-N1) \text{ pour } 0 <= J1-(M1-N1) < 774$$

$$K1=J1-(M1-N1)-774 \text{ pour } 774 <= J1-(M1-N1)$$

où

M1 est l'index de l'octet dans la dite TU-32 dans la trame d'octet de destination, et N1 est l'index de l'octet dans la dite TU-32 dans la trame d'octet d'origine.

23. Méthode pour le positionnement des octets V de pointeur relatifs à une unité tributaire TU-21 dans le passage de la trame d'octet d'origine à une structure de trame de 63 paquets ou unités de données et puis à une trame d'octet de destination d'un débit de données binaire, où les octets V se trouvent dans une position standard pré-sélectionnée,

qui comprend la phase de numéroter les octets occupés par une TU-21 générique dans les trames d'octet d'origine et de destination, respectivement, par un index de 0 à 107 selon la séquence dans laquelle ceux-ci apparaissent dans le développement temporaire de la trame, la dite méthode étant caractérisée en ce qu'elle comprend en plus la phase de sélectionner les index K2 et J2 relatifs au même octet V d'une TU-21 donnée, respectivement dans la trame d'octet d'origine et dans la trame d'octet de destination, et pour une unité de donnée générique relative à une TU-21 et un octet générique de la dite TU-21 à l'intérieur de la dite unité de données, de tel manière que:

$$K2=J2-(M2-N2)+108 \text{ pour } J2-(M2-N2) < 0$$

$$K2=J2-(M2-N2) \text{ pour } 0 <= J2-(M2-N2) < 108$$

$$K2=J2-(M2-N2)-108 \text{ pour } 108 <= J2-(M2-N2)$$

où

M2 est l'index de l'octet de la dite TU-21 dans la trame d'octet de destination, et N2 est l'index de l'octet dans la dite TU-21 dans la trame d'octet d'origine.

24. Méthode pour le positionnement des octets V de pointeur relatifs à une unité tributaire TU-12 dans le passage d'une trame d'octet d'origine à une structure de trame de 63 paquets ou unités de données, et puis à une trame d'octet de destination d'un débit de données binaire, où les octets V se trouvent dans une position standard présélectionnée,

qui comprend la phase de numéroter les octets occupés par une TU-12 générique dans les trames d'octets d'origine et de destination, respectivement, par un index de 0 à 35 selon la séquence dans laquelle ceux-ci apparaissent dans le développement temporaire de la trame, la dite méthode étant caractérisée en ce qu'elle comprend en plus la phase de sélectionner les index K3 et J3 relatifs au même octet V d'une TU-12 donnée, respectivement dans la trame d'octet d'origine et dans la trame d'octet de destination, et pour une unité générique relative à une TU-12 et un octet générique de la dite TU-12 à l'intérieur de la dite unité de données, de tel manière que:

$$K3=J3-(M3-N3)+36 \text{ pour } J3-(M3-N3) < 0$$

$$K3=J3-(M3-N3) \text{ pour } 0 <= J3-(M3-N3) < 36$$

$$K3=J3-(M3-N3)-36 \text{ pour } 36 <= J3-(M3-N3)$$

où

M3 est l'index de l'octet dans la dite TU-12 dans la trame d'octet de destination, et N3 est l'index de l'octet dans la dite TU-12 dans la trame d'octet d'origine.

fig. 1A
fig. 1B
fig. 1C
fig. 1D
fig. 1E

EP 0 651 924 B1

270 columns

9 columns

261 columns

1
2
3
4
5
6
7
8
9

PAYLOAD

SOH

PAYLOAD

fig. 2A

fig. 2B

SOH   PAYLOAD   VC-4

VC4 : 9 rows X 261 columns

fig. 2C

POH + STUFF

TUG–32 TU–32

VC–4

EP 0 651 924 B1

VC-4

POH + STUFF

TUG-21 TU-21

fig. 2D

EP 0 651 924 B1

EP 0 651 924 B1

261

1 2    6                                    256 = 84 X 3

63            63            63            63

1
2
3
4
5
6
7
8
9

VC-4

POH + STUFF

TU-12

fig. 2E

fig. 3A

SOH + POH + STUFF

TU–32

SPP

EP 0 651 924 B1

fig. 3B

Legend:
- SOH + POH + STUFF
- TU–21
- SPP

EP 0 651 924 B1

fig. 3C

SOH + POH + STUFF

TU-12

SPP

EP 0 651 924 B1

fig. 4

fig. 5

OVH    H HEADER    UCB

EP 0 651 924 B1

fig. 6

◩ OVH    H HEADER ▨ UCB

EP 0 651 924 B1

C63          C1          C2...C62          C63          C1

125 us

CDT (125us)

CDT (125us)

TU-12          D63          D1          D2          D3...D62          D63          D1          D2

fig. 7

C63          C1          C2...C20          C21          C22

41.7 us

CDT (41.7us)

CDT (41.7us)

TU-21          D63          D1          D2          D3...D20          D21          D22          D23

fig. 8

⬚ OVH          H HEADER          ⬚ UCB

EP 0 651 924 B1

C63...C1...C57    C58    C59...C60    C61    C62    C63

125 us

CDT

CDT

TU-32    D58    D59 ... D61    D62    D63    D1

fig. 9

OVH    H HEADER    UCB

fig. 10

fig. 11